(19) Europäisches Patentamt

European Patent Office

Office européen des brevets

(11) **EP 0 691 525 B1**

(12) **EUROPEAN PATENT SPECIFICATION**

(45) Date of publication and mention
of the grant of the patent:
**02.01.2002   Bulletin 2002/01**

(51) Int Cl.⁷: **G01D 5/26**, G01B 11/30

(21) Application number: **95201620.2**

(22) Date of filing: **16.06.1995**

(54) **Sensing system with a multi-channel fiber optic bundle sensitive probe**

Fühlsystem mit einem Fühler mit einem mehrkanaligen optischen Faserbündel

Système senseur comprenant une sonde capteur multicanal à faisceau de fibres optiques

(84) Designated Contracting States:
**DE GB**

(30) Priority: **17.06.1994  US 261673**

(43) Date of publication of application:
**10.01.1996   Bulletin 1996/02**

(73) Proprietor: **CeramOptec GmbH
53121 Bonn (DE)**

(72) Inventors:
• **Danielian, George
  Moscow (RU)**
• **Neuberger, Wolfgang
  D-40503 Mönchengladbach (DE)**

(56) References cited:
EP-A- 0 008 267        WO-A-87/02176
WO-A-90/15306        FR-A- 2 191 723
SU-A- 1 631 496        US-A- 4 523 092

EP 0 691 525 B1

**Description**

**BACKGROUND OF THE INVENTION**

**1. Field of the Invention**

The invention relates to a multifunction fiber optic bundle sensitive probe, and, more particularly, to a sensing system for the fiber optic probe that provides automatic adjustment of the changes in the intensity of the reflected light.

Fiber optic probes are flexible contactless sensors, which use light beams transmitted from light sources through bundles of optical fibers to reflected targets. Part of the light beam is reflected off the target and returned along receiving fibers in the bundle back to a light intensity sensor or sensors in the probe module. The intensity of the reflected light is a function of the distance, $Z$, and two inclination angles, $\alpha$ and $\beta$, between the probe tip and target; the luminous reflectance, $R_0$, between the target and light beam wavelength; an average light intensity, $I_0$, and the light intensity angle distribution of the light source; and the average roughness of the target surface.

The output signal of the light sensors can provide a highly precise measurement of the distance, or more importantly, of the changes in displacement, vibrations, small inclination angles or average roughness. However, because of variations in certain operating parameters such as luminous reflectance of the target, changes in intensity of the light sources, temperature changes, and other factors that influence light conductivity, it is necessary to separate the information about the various parameters using different channels, and to make adjustments through the sensing system if any of these factors change.

This and other objects of the invention are attained in an embodiment having a multichannel fiber optic bundle (MFOB) with a sensitive probe tip with three branches of two receiving types of channels and one transmitting channel, which provides a method of sensing whereby four main signals are directed to measuring various parameters and two signals are directed to compensation and roughness measurements.

**2. Information Disclosure Statement**

Many fiber optic probes have been designed.

U.S. Patent 4,254,331 to Dorman et al. and 4,247,764 to Kissinger describe fiber optic instruments for measuring dynamic change in the gap between a probe tip and a target, the instrument having a light source, two sensors and one light conducting cable. The device incorporates the regulation of equal mean intensity at the reflected light sensor, despite changes in target reflectivity and cable light conductance.

U.S. Patent 3,327,584 to Kissinger describes a fiber optic probe which is highly sensitive and unaffected by temperature or environment. It senses the position of a test object and uses different diameters and locations of two light receiving groups to compensate for variations.

U.S. Patent 4,488,813 to Kissinger describes a device that employs dual probes to create an output signal having a gap calibration which is independent of surface reflectance.

U.S. Patent 3,919,546 to Lutus describes a photo-electric apparatus for tracking a periodically moving object in order to provide an accurate electrical signal corresponding to the motion of the object. The device incorporates a feedback path that compensates for the drift in the photo-cell and light source caused by ambient temperature changes, foreign matter and aging.

U.S. Patent 4,701,610 to Hoogenboom describes a fiber optic proximity sensor for narrow targets with reflectivity compensation. The device generates an output signal formula from two sensor signals and uses a scaling constant, determined from the response characteristics.

U.S. Patent 4,692,611 to Hoogenboom describes a fiber optic proximity sensor with feedback servo-imaging, with two bifurcate fiber optic bundles arranged in parallel with the reflected light from the target being transmitted to two separate sensors. The output difference of the sensors is used to derive a control signal for tracking the target, then moving the imaging means in response.

U.S. Patent 4,674,882 to Dorman et al. Describes a precision optical displacement measuring instrument which utilizes a servo-controlled fiber optic sensor to measure the displacement of the target, such that the fiber optic sensor and lens assembly are vibrated toward and away from the target.

WO 90 15306 A to BEI Electronics, Inc. describes a fiber optic bundle to measure accurately displacement of a surface from the bundle tip. Two separate concentric receiving channels surround a central core channel of transmitting fibers to improve the measurements. Basically only one function can be measured and the geometry is concentric.

WO 87 02176 A to Mechanical Technology Inc. describes a fiber optic proximity detector to sense the relative position of an object with means to compensate for surface reflectivity by having two reflected light signals from the same surface. A single light source and path are used and the measurements deal with one specific area of the surface.

The path of the two reflected light signals is altered to provide additional information on the gap and thus permit reflectivity compensation.

FR-A-2 191 723 to Compteurs Schlumberger describes another device and method to use optical fibers to measure displacement. Multi bundles are used with a single source illuminating a central section of a surface and two bundles of receiving fibers are placed either linearly at measured offsets to the central transmitting bundle, or the transmitting and receiving fibers are alternated in two linear arrangements separated by a predetermined distance.

EP-A-0 008 267 to Societe Etudes et Applications Techniques SEAT describes a fiber optic position detector. A grid of fibers having a source for each fiber have the opposite ends facing a surface together with a receiving fiber which transmit the reflected signal to an individual receiver element, wherein the rows correspond with the receivers and the columns correspond to the emitter sources. The presence, position or displacement of an opaque or reflective object may be determined by the array.

However, none of these inventions discloses a fiber optic bundle arranged with a plurality of receiving and transmitting channels in a 3∗3 matrix formation for multichannel transmitting and receiving, and to a sensing system used therewith for automatically compensating for changes in the intensity of the light beam.

**OBJECTS AND SUMMARY OF THE INVENTION**

The present invention involves a multichannel fiber optic bundle, and more importantly, a multifunction sensing system which utilizes such fiber optic bundle, wherein the displacement, vibration, inclination angles and/or roughness are sensed simultaneously. The apparatus of this invention automatically separates these parameters and compensates for the changes in the intensity of the light beam. The output signals of the displacement, vibrations and angles are essentially independent of temperature, target reflectivity, and external illumination, and automatically compensate for factors which influence the transmission of light through the sensing system (such as roughness of reflected target and fiber defects or the radius of curvature of the bundle). It also provides the possibility of long term multifunction computer data analysis and automatically compensates for different target reflectivity.

One embodiment of the present invention comprises a multichannel fiber optic bundle (MFOB) with a sensitive probe tip having at least three types of transmitting and receiving ends bundled together in 3∗3 matrix formation.

The above, and other objects, features and advantages of the present invitation will become apparent from the following description read in conjunction with the accompanying drawings.

**BRIEF DESCRIPTION OF DRAWINGS**

Fig. 1a shows a perspective view of the multichannel fiber optic bundle of the present invention with an exploded view of one of the receiving channel branches;

Fig. 1b shows a cross-sectional view of the sensitive probe tip end of the multichannel fiber optic bundle;

Fig. 1c shows a cross-sectional view of a modification of the sensitive probe tip end of the multichannel fiber optic bundle;

Fig. 2 shows a schematic of one embodiment of the sensor and multichannel fiber optic bundle of the present invention;

Fig. 3 shows a schematic of an alternative embodiment of the sensor and multichannel fiber optic bundle

Fig. 4a shows a graph demonstrating the randomization between the signals of four symmetric channels;

Fig. 4b shows a graph illustrating the basic channel characteristics;

Fig. 4c shows a graph of the relationship between the output voltage and the measuring distance: the output analog signal;

Fig. 4d shows a portion of the graph of Figure 4c fragmented in the middle part, around Y = X = 0;

Fig. 5 shows a direct reflection model of the sensitive probe prepared for numerical analysis;

Fig. 6 shows a graph of the analog output voltage vs. the measuring angle, target to probe angle;

Fig. 7 shows a graph of Fourier numerical analysis normalization of vibrations of all the data points obtained from the sensor and stored in the PC by the I\O board;

Fig. 8 shows the accuracy of the roughness target scan.

**DESCRIPTION OF PREFERRED EMBODIMENTS**

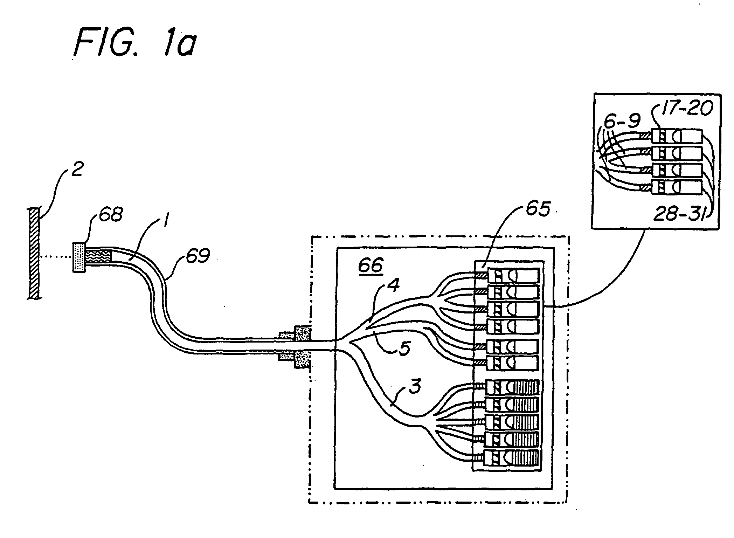

The present invention discloses a multifunction sensing system which utilizes a multichannel fiber optic Bundle (MFOB) **1** as shown in Fig. 1a-3. The MFOB comprises three branches - two of which **4, 5** have receiving channels and the third **3** having transmitting channels. The first receiving branch **4** has channels **6, 7, 8, 9** and the second receiving branch **5** has two channels **15, 16.** The third transmitting branch is comprised of five channels **10, 11, 12, 13,** and **14.**

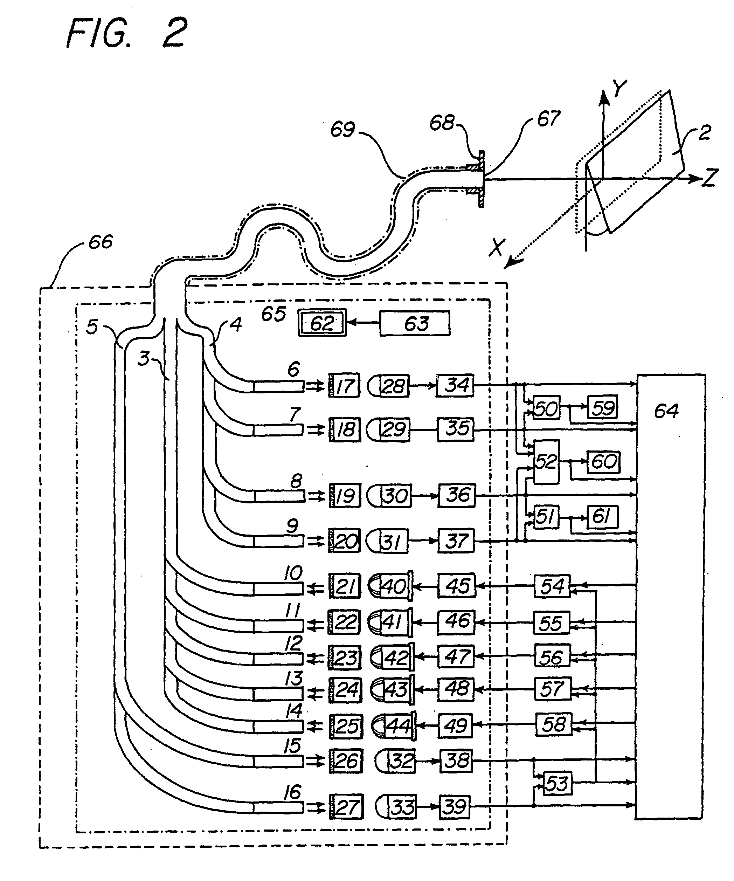

As seen in Figure 2, the four receiving channels **6-9** of the first branch **4** and two receiving channels **15, 16** of the second branch **5** are optically connected to optical filters or day light filters **17, 18, 19, 20, 26** and **27** which are connected to light sensors **28-33**. In operation, the light from light sources **40-44** is conducted along respective optical filters **21-25** from the five transmitting channels of the third branch **3** to the probe tip **67** of the MFOB 1, where it is transmitted to a reflected target 2.

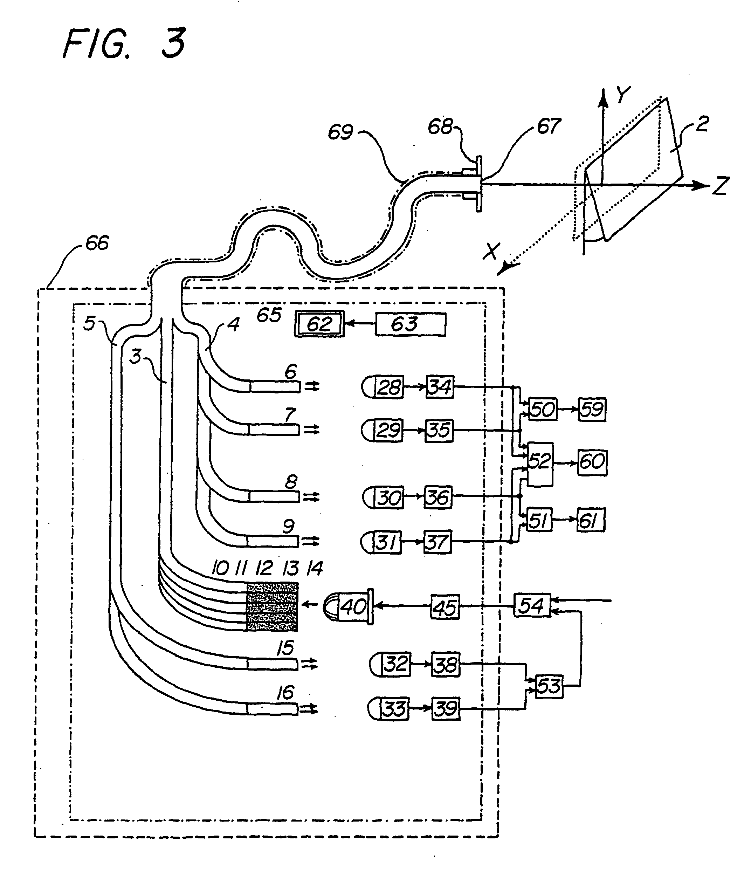

Figure 3 shows a device similar to that described above using Figure 2, however, the light sources **40-44** of Figure 2 are replaced by a single light source **40** in Figure 3. The modification of Figure 3 is restrictive, but shows the possibility for changing this electronic part and allowing one high power laser diode, for example, to be simply controlled with small amounts of noise and small fluctuations in the light beams. The device of Figure 2, on the other hand, is designed to handle pulsed light source. In can be illuminated one after another such that different relations are established, for example: (A1-A6) version 1 for channel **10** - on/ channels **11-14 -** off; version 2 for channel **11** -on/ channels **10,12-14 -** off; version 3 for channels **10,11** - on/ channels **12-14** -off

In either case, the reflected light is received by the receiving channels **6-9, 15, 16** and is analyzed as follows. (The reflected light is amplified and converted to an electrical signal.) A set of amplifiers **34-39** is connected by inputs with the respective light sources **28-33.** These amplifiers aid in the conversion of the light signals into electrical signals $A_1$ - $A_6$ (not shown).

The signals $A_1$ - $A_4$ that arise from the four light sensors **28-37** and the amplifiers 34-37 follow one path (angle measurement). While the signals $A_5$ and $A_6$ that arise from the amplifiers **38,39** of the receiving channels follow a second path. The signals $A_1$- $A_4$ that are connected to two submitting elements **50** and **51** which are intended as two angle signals $A_\alpha$ and $A_\beta$ (which are the angle measurements) are determined by the equations:

$$(1) \qquad A_\alpha = (K_1 A_1 - K_2 A_2) K_\alpha = \phi_1(\alpha) \qquad \text{if } \alpha \leq \alpha_{max}$$

$$(2) \qquad A_\beta = (K_3 A_3 - K_4 A_4) K_\beta = \phi_2(\beta) \qquad \text{if } \beta \leq \beta_{max},$$

where K represents an amplification constant.

Signals $A_1$ - $A_4$ are also connected to a summary element **52** for displacement measuring. The output signal from the summary element, represented as $A_z$, is the linear function below of $A_1$ - $A_4$:

$$(3) \qquad A_z = K_{1z}A_1 + K_{2z}A_2 + K_{3z}A_3 + K_{4z}A_4$$

When $A_z$ is independent of the change in the $\alpha$ and (3 angles, the following conditions holds, where:

$$K_{1z}A_1 = K_{2z}A_2 = K_{3z}A_3 = K_{4z}A_4$$

The signals $A_5$, $A_6$ from amplifiers **38, 39** of the receiving channels **15,16** are connected with inputs of summary element **53** which is involved in the light intensity measuring and control, and creates a signal $A_0$ for light intensity feedback control, such that:

$$(4) \qquad A_0 = (K_5 A_5 + K_6 A_6) K_c$$

The light intensity from the light source **40-44** is dependent upon the electrical signals that come from the five amplifiers **45-49.** These, in turn, are controlled by light regulators **54-58** which are designed with two inputs, connected to the output of the summary element **53** for light adjusting.

The analog signals $A_\alpha$, $A_\beta$ from the two submitting elements **50,51** and the analog signal $A_z$ from the summary element **52** are connected to zero or analog signal registrators **59-61**. This connection allows the possibility to set up the preliminary distance $Z_0$ between the probe tip **67** and the reflecting target **2**.

A thermosensor **62** with a heating element **63** is set in a (thermostabilized) part **65** of a thermostabilized box. This box has a special cover **66** which isolates the contents of the box from thermal influences.

All of the output for numerical analysis from elements **63,50,52,51,53**, and inputs from elements **54-58** are connected with the input-output board **64** of a computer with at least ten analog-digital converting (ADC) inputs and at least one digital-analog converting (DAC) output. These elements provide the system with the capability of numerically analyzing and monitoring the main signals.

A light protector **68** for the MFOB is designed around the probe tip **67** to prevent the receiving channels of the MFOB from being influenced by external light. It is placed on the end of the flexible light protector hose **69** (and serve to protect the small radius of curvature).

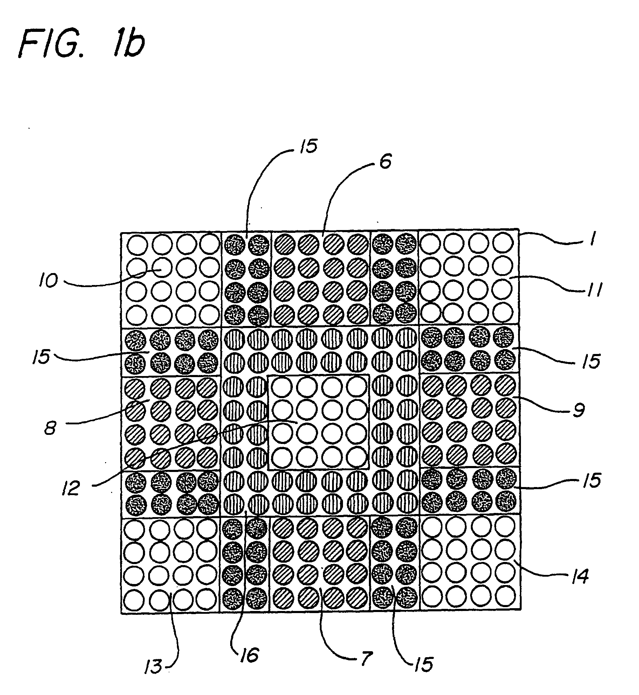

More specifically, the probe tip end of the claimed MFOB 1 comprises a symmetrical arrangement of fibers in a rectangular 3∗3 matrix formation **100** with nine sections **6-14** as shown in Figures 1b and lc. These nine sections **6-14** include a center section of transmitting fibers **12** surrounded by a first supplementary section of inner layer of fibers **16** which are bundled into a first separated receiving channel forming a part of the second branch **5** of the multichannel fiber optic bundle; a plurality of supplementary sections of fibers placed alongside two side boundaries of each of the remaining eight sections **6-11, 13-14,** of the 3∗3 matrix to form a collection of second separated receiving channels **15** of the second branch **5** of the multichannel fiber optic bundle. The four corner sections and the center section of the 3∗3 matrix are occupied by the five separated transmitting sections **10, 11, 12, 13, 14** form the third branch **3** of the multichannel fiber optic bundle **1;** and the four middle sections of the 3*3 matrix 100, located between two of the respective four corners of the matrix, are occupied by receiving fibers from the four channels **6, 7, 8, 9** of the multichannel fiber optic bundle 4e first branch **1**.

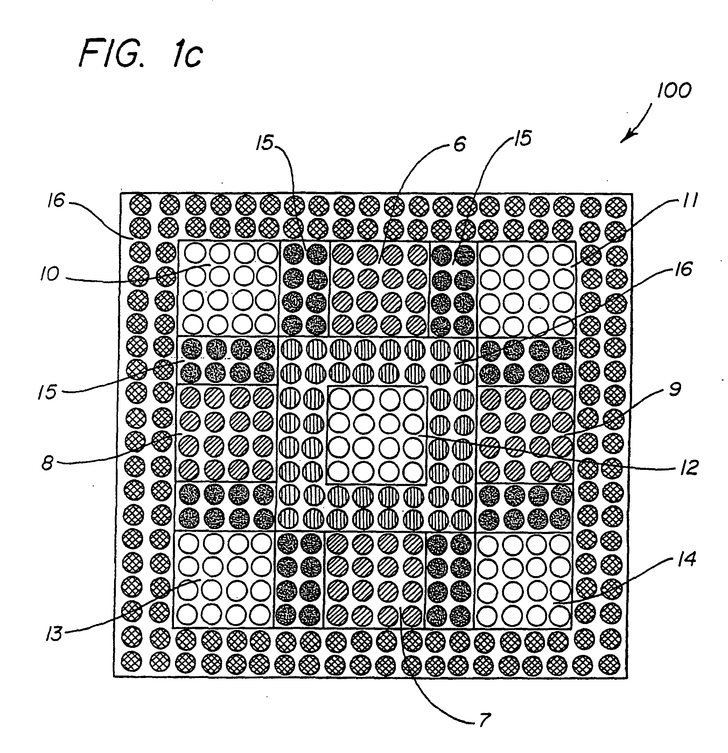

In addition, as shown in Figure 1c, an array of receiving channels **16** may surround the boundary of 3∗3 matrix **100**. The main purpose for adding a surrounding outer layer (of receiving channels) **16** is to create a difference in the influence from the transmitting sections **10-14** to these receiving channels **16** by allowing the possibility to include a light beam inclined at a large angle (the angle of maximum numerical aperture). That is, if reflected target is placed a large distance away from the end of the probe, the angle of incidence will increase. The outer layer of receiving fibers **16** thus allows for an increase in the area of reception, or numerically, a larger linear range in which to operate.

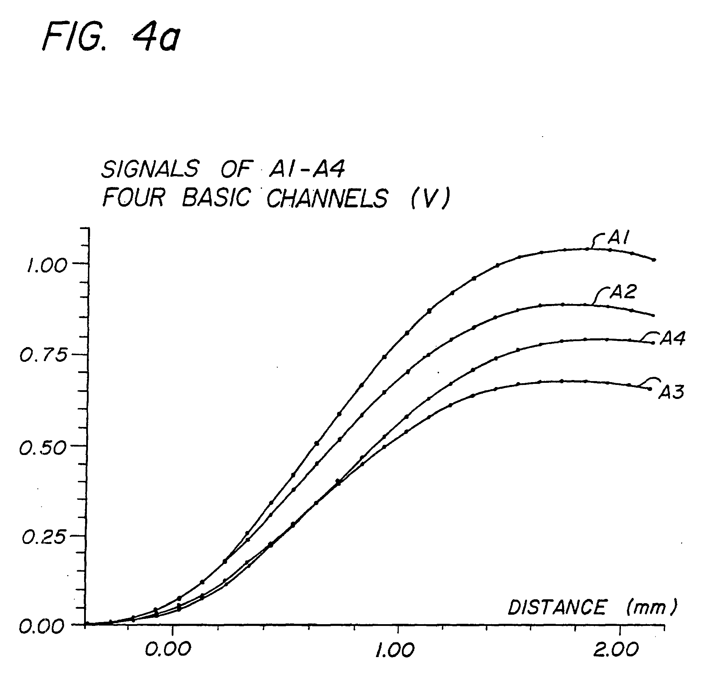

A second end of each of the fibers of said first **15** and second **16** separated receiving channels of said second branch **5** are bundled into at least two separate channels and have means for optical connection to at least two light sensors **32, 33.** A second end of the fibers of the four channels **6-9** of said first branch **4** have means for optical connection to light sensors **28-31,** with the light sensors having means for adjusting **50-53**. A second end of the fibers of the five separated transmitting sections **10-14** of the third branch **3** are bundled into one and five transmitting channels and have means for optical connection to respective light sources **40-44.** Means are included **50-64** for programmably controlling, measuring and analyzing data received from said channels. Much of this analysis is shown in the graphs of Figures 4a-4d and Figures 6-8.

It is necessary to approximate the MFOB structure 1 as a matrix **100** of receiving fibers placed in positions of matrix [i,j] with the same positions of the matrix of the transmitting fibers being labeled as [k,l].

The MFOB structure **1** can be optimized for six main signals as shown from the graphs in Figure 4a-4d. The features of this curve make it possible to work within the linear range ($Z_0 - \Delta Z$, $Z_0 + \Delta Z$) of four receiving channels **6-9,** with a very small dependence (negative and positive) on the two receiving channels **15, 16.** Figure 4a shows a graph of electrical signals A1 - A4 (the four basic channels) in volts which come from amplifiers **34-37,** respectively. These values are relative and depend from a factor of amplification as follows:

$$A1 = [K1 \ast I1 + A10]/A1_{max}$$

$$A2 = [K2 \ast I2 + A20]/A2_{max}$$

$$A3 = [K3 \ast I3 + A30]/A3_{max}$$

$$A4 = [K4 \ast I4 + A40]/A4_{max},$$

where K1-K4 are the amplification, and A10-A40 are the shifts.

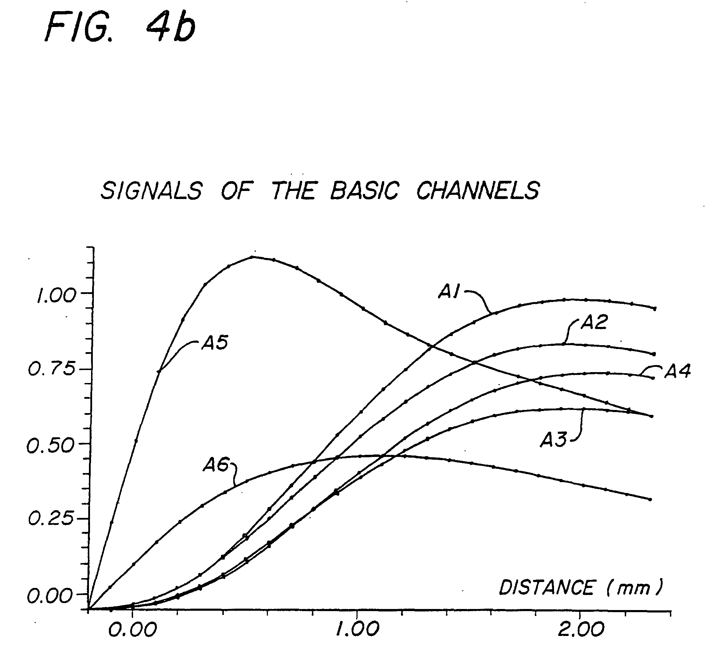

Figure 4b is similar to Figure 4a with the addition of signals A5 and A6, where **A5** is a relative signal from amplifier **38** and **A6** is a relative signal from amplifier **39.** The distance on the *x*-axis is the displacement in the *z*-direction (as seen in Figure 2, between the target surface of the sensitive probe **67** and the reflected surface 2).

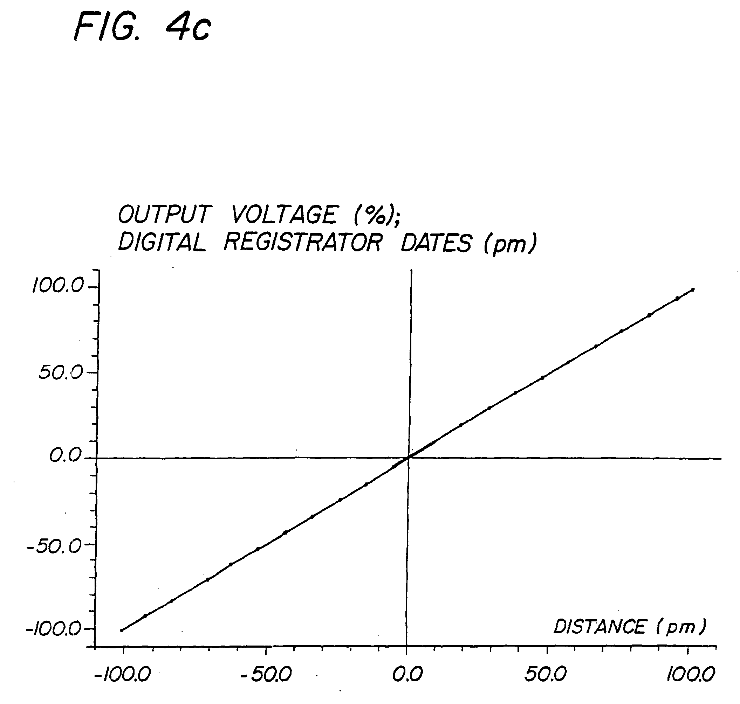

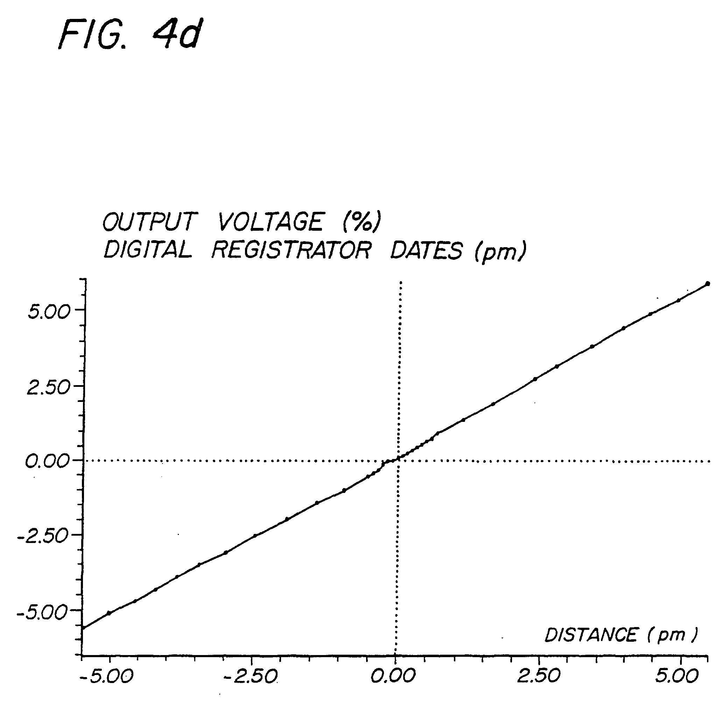

Figures 4c and 4d are output analog signals from structure **52** (transferred to microns on the *y*-axis). The *x*-axis distance is a measurement between the target surface of the sensitive probe, relative to the stand offposition (middle point of the linear range).

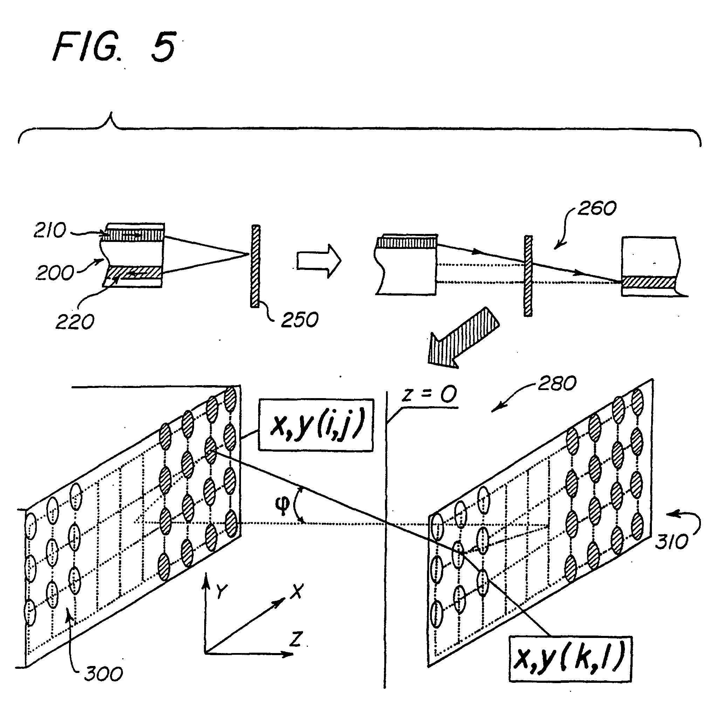

The direct reflection model is depicted in Figure 5 showing a probe **200**, a fragment of one transmitting channel **210**, a fragment of one receiving channel **220** and a reflected target **250**. The projection is transferred through an ideal mirror **260** and then transferred in a matrix for numerical analysis using software **280**. The fiber target 300 is shown along with a transpose of the target **310**. The direct reflection model is constructed such that the mirror virtual image **260** of the MFOB matrix **100** is symmetrically placed in relation to the plane XOY in point $Z_0$, with means for opening out the planes of the MOFB matrix projection.

The elementary light intensity $I1_{i,j,k,l}$ from one transmitting fiber [k,l] to other receiving fiber [i,j] depends from different parameters and can be analyzed based upon the total middle light intensity from surface S [k,l] to surface S [i,j]:

$$I1_{i,j,k,l} =$$

$$I_0 \ R_0 \ S_{i,j} \ S_{k,i} \ \cos\Theta_n \ [\cos(\Theta_n \ /2Z)^2]\cos^m (\Theta_n) \ F^4 (\Theta_n) \ G(\Theta_n)$$

$$F(\Theta_n) = 0.5 \ \{[tg^2 (\Theta_n - \Theta_t) + \sin^2 (\Theta_n - \Theta_t)] \ / \ [tg^2 (\Theta_n + \Theta_t) +$$

$$\sin^2 (\Theta_n + \Theta_t)]\}$$

$$\Theta_t = \arcsin (\sin (\Theta_n) / n )$$

$$\cos^2 \Theta_n = (2Z)^2 / [(2Z)^2 + hl(i - l)^2 \cos \alpha + hj(i - l)^2 \cos\beta]$$

$$G(\Theta_t) = 10^{(-2\gamma L)/(\cos(\Theta t))}$$

Where:

$I_0$ - the average intensity of the light source,

$S_{i,k} \ S_{k,l}$ - transmitting fiber receiving surface,

$R_0$ - luminous reflectance of target,

$\Theta_n$ - inclined angle between the receiving/transmitting fiber connection line and the normal to the target,

m - a power of the cosine function (which depends from the beam angle

$\Theta_{tR}$ distribution, for a real light source with narrow beam m>4),

$F(\Theta_n )$ - a function of Fresnel losses,

$G(\Theta_t)$ - a function of absorbance losses in fiber,

$\gamma$ - an absorbance factor [1/$m$], [dB/km],

$\alpha, \beta$ - angles included between the probe tip surface and the reflected target.

The light intensity for receiving channel $I2_{(channel \ N)}$, which comes from all of the transmitting fibers **10 - 14** of the matrix can be calculated as a sum of elementary light intensities $I1_{i,j,k,l}$ :

$$I2_{channel \ N} = \Sigma \ \Sigma \ I1_{i,j,k,l}$$

From this calculation, the optimal geometric size ofthe MFOB 1 can be obtained using different values of distance, Z, and/or different values for the angles $\alpha$ and $\beta$: where $I2_{channel \ N} + \phi (Z, \alpha, \beta )$, through numerical analysis.

The real output voltage / signal $A_1$ - $A_6$ of amplifiers **34-39** is a linear function of $I_{1N}$ - $I_{6N}$ and can be shown as the points in Figure 4 as relate to the approximation accuracy. Numerical results of the MFOB analysis are used for the matrix construction and for designation of MFOB geometry.

The MFOB structure as shown in Figure 1a offers the feature of simultaneously sensing the distance, Z, the angles, $\alpha$ and $\beta$, the vibration and the roughness in real time (condition).

The probe tip **67** of the MFOB **1** is located by the light protector **68** ahead of the reflected target **2.** Distance $Z_0$ between the reflected target **2** and the probe tip **67** can be adjusted by using the values from the electronic signals of zero or analog signals registrators.

Operational Features ofthe Device

Once the device is turned on, the heating system setting is activated. The stabilization temperature chosen is equal to the optimal one for the operation (50° C, for instance). The thermosensor **62** can have different configurations. The thermoresistor $R_t$ is inserted in a bridge circuit on an amplifier input and is arranged inside of the thermoconductive box **65**. The amplifier **71** generates a signal for the heater **63** which is also arranged in the thermoconductive box **65**. The time of the thermostabilization mode is dependent upon the volume of the box, the environmental temperature and heater power; however, does not usually exceed **10** minutes. After this function, the temperature remains relatively constant, with the heat mode holding and a small power consumption (since the box is equipped with a heat insulating cover **66**). This mode of temperature stabilization is characterized not only by miniature stabilization, but also by preventing the channel ends and optical members from sweating.

Particularly important are those circuit members which introduce the most error, usually as a result of temperature change in the form of a characteristic drift (when the temperature changes, have the same stable temperature and as a result, zero drift in the device output characteristic does not exceed 0.3% per day, and the device can be used for long-time measurements).

At the start, the surface **67** is secured on a fixed support before the surface **2** at the distance $Z_0$. It is possible by setting the zero condition according to the indications of the recorders **59-61.** The light sensors **28-33** and the light source **40** are chosen in such a way that they include optical filters directly on their surface so that it is not necessary to provide additional optical filters. The photodiodes and the light emitting diodes are chosen in such a way that the maximum illumination of the emitter corresponds with the maximum receiver sensitivity. As a result, the noise and light emitted out of the strict receiver spectrum do not effect the device error. This is particularly important in the case where the surface **2** is made of materials with a fluorescence effect. The most preferable range is 0.8-0.9 micrometers, where, not only metals and ceramic reflect well, but also the ferrocovered films of hard diskguides or diskettes for computers.

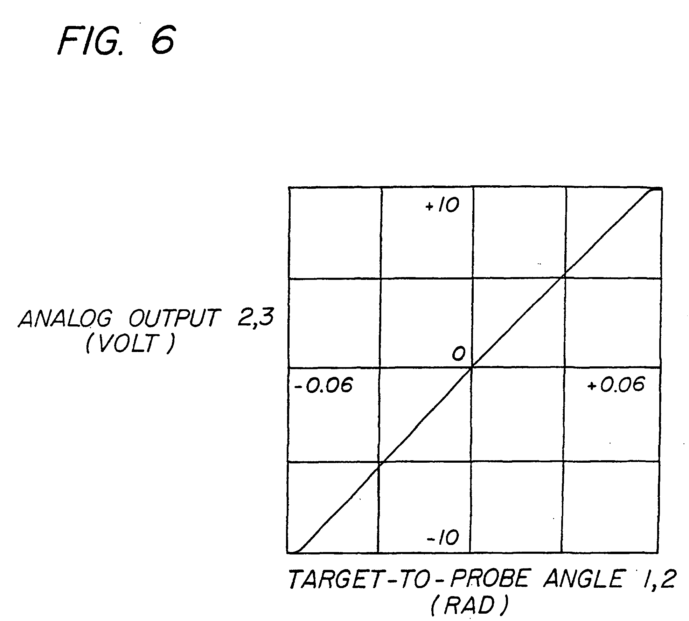

The light sources current $I_{LS}$ is chosen less than the maximum permissible value $I_{max}$ in the magnitude dI = $I_{max} * R_0$ . This value, expresses in %, provides the same % of the permissible deviation in the reflection factor of the surface **2.** The optical compensation system on the channels **15-16** operates for adjustment and tuning of the light source **40** current. Figure 6 shows the most preferable embodiment of a simple system for the light source **40** current adjustment. The input $U_R$ is used for an initial tune-up by connecting to a device such as a reference voltage source. Signals of the channels **15, 16** as shown in Figure 4b go to the summary element **53,** after amplification on amplifiers **38,39.** There are two possibilities to get the characteristics F($Z$) for the channels **15, 16** shown in Figure 4b, independent of $Z$ across the entire section d$Z$ of the working range. It is possible to adjust an effect of the channels **15** and **16** by changing the gain factor of the amplifiers **38, 39** or by changing an effect of the input currents on the resistive type inputs of summary element **53**. The signal of the summary element **53** controls the regulators **55**, power amplifier **46**. The light source **40** current and light beam are held on such a level that the level of the summarized signal on the summary element **53** output in the work range is constant and independent of change in the surface reflection factor, virtual surface pollution as well as the optical member degradation during a long-time operation. In this case , the optical identity ability of all channels is used. As a result, in decreasing $R_0$, for example, to 30 % the signal is changed on all receiving channels accordingly. By compensation on the feed-back line from the channels **15, 16** the similar compensation condition is achieved in other channels **6-9**. For generating a signal proportional only to $Z$ displacement, the principle of averaging the signals from four channels **6-9** arranged symmetrically on the probe tip of surface of the MFOB **1** is used as shown in Figure 1b. For instance, if the plane of probe tip surface **1** is not parallel to the surface of the reflected target **2**, all signals from the amplifiers **34-37** are not equal to each other, but their sum does not depend on the angle of inclination and is proportional to $Z_0$ displacement.

The difference amplifiers **50, 51** at the presence of the angles of inclination, provide the proportional signal $\alpha$, $\beta$. In this case, the MFOB symmetry provides an effect absent at the angle of inclination - $\alpha$, on the channel recording the angle of inclination - $\beta$. For example, in order to measure the vibration in a large dynamic range, the outputs of the subtracting elements **50,51** and summing element **52** can be connected to the inputs of a multi-channel oscilloscope. Or, for instance, in order to reduce the effect of the slow change in the process of light transmission on fibers or an effect of power sources of illumination it is possible to give an impulse mode to the light regulators **54-58** and respectively a mode of synchronous detection in the amplifiers **34-39**.

Description of The Main Embodiment

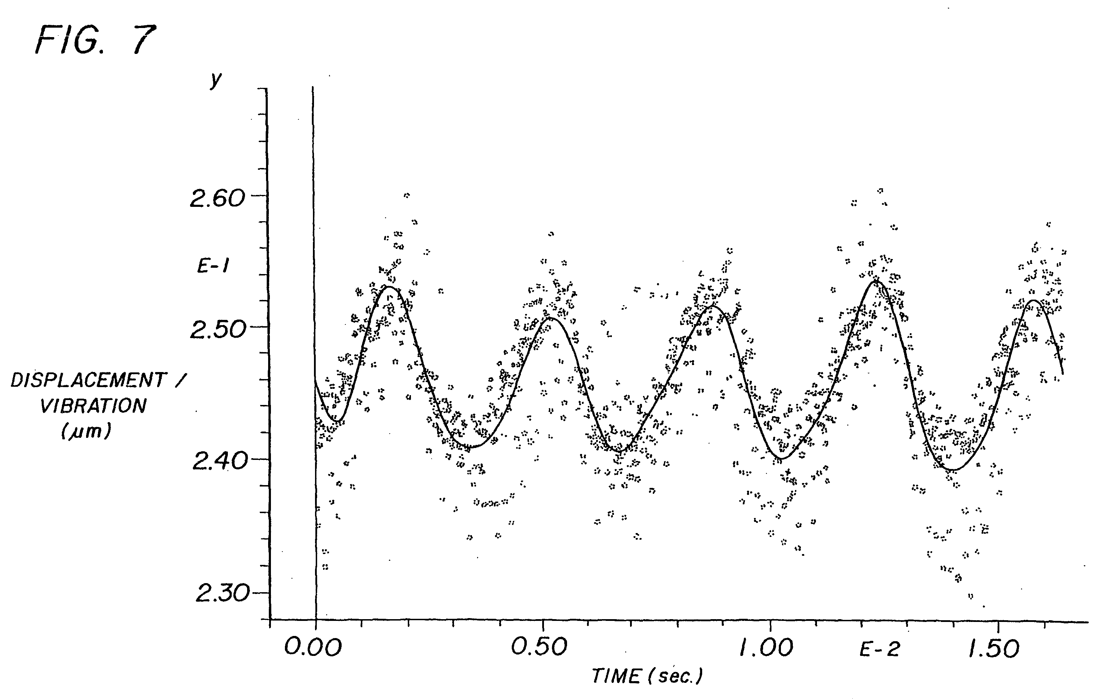

The described embodiment of the MFOB **1** and sensing system as shown in Figure 2 has a larger functioning capacity than the one shown in Figure 3. This larger capacity is achieved by the presence of optical filters **17-27**, by the presence of at least five light sources **40-44**, which are respectively provided with amplifiers **45-49** and light regulators **54-58**. In this embodiment, the channels of the MFOB third branch **3** are each connected separately to each light source. This allows individual regulation of the duration of time and intensity of light emitted by the light source **42** connected to the channel **12**, the light emission being caused only from the central member **12** of the array of the MFOB end **1** shown in Figure 5. The characteristics of the receiving channels **6-9** and **15, 16** are significantly different from the situation when light is emitted from four angular surfaces of the MFOB end **40, 41, 43, 44.** In this way, when light sources are switched on sequentially, each receiving channel is able to send five different characteristics featured by the slope of the specific sections and by the position of the maximum signal dependent on the Z, $\alpha$ and $\beta$ parameters, to its output through amplifiers. The different characteristics are caused by the difference of the interposition between the zones of emission and the zones of reception. The calculation of such characteristics with a computer is possible according to the above methods using the light flux on the basis of summing the elementary fluxes of each pair (couple) of transmitting (*i,j*) and receiving fibers. For treatment with the given characteristics, in order to get output dependencies, F(Z), F($\alpha$), F($\beta$), a multifunction board with multichannel analog-to-digital and digital-to-analog conversion for computers (-I / O board with ADC & DCA for PC's) has been used. This allows the application of only one of the "National Instrument Co." boards with a number of analog inputs- at least eleven- with a minimum of at least one digital-to-analog outputs. In this case, all main data channels from the amplifiers **34-37**, **38, 39** come from the summary elements **52, 53** and are included in ADC inputs of the I\O board. The digital treatment of the signal using and given software that performs numerical analysis, significantly improves the characteristics. For instance, through Fourier transform analysis, it is possible to by conversion to separate vibration signals with small amplitudes and without phase distortion as shown in Figure 7.

Figure 7 shows graph of a real signal with the amplitude of 0.6 micrometers from the summary element **52** before and after the Fast Fourier Transform (FFT) analysis. The FFT allows for a curve fit of the real signal measurement of all points from structure **52** (optic table; measuring by sensor MFOB). The *y-* axis is the displacement/vibration having a range of o.26-0.23 micrometers and the x-axis is time in seconds.

In addition, the use of the I\O board introduces individual control of the emission control and emission intensity of the light sources. This feature allows for an unlimited number of MFOB applications. During the roughness measurement at the reflecting surface **2,** there is provided an evaluation at the signal relation coming from the receiving zones on the channels **15, 16** when light source **40** is switched on. If for an ideal mirror reflecting surface at the constant values Z, $\alpha$ and $\beta$, we have the signals A1-A6, in case of roughness presence, a light part reflected at the larger aperture angle is increased, and consequently, the light flux on the receiving zones is redistributed. In this case, the light intensity captured by the channel **15**, is reduced, but light intensity in the channels **1-4** and **16** is increased in a different magnitude. So, the signal relationship A5\A6 at the displacement of the sensitive end of the MFOB 1 reflects a root mean square roughness of the surface. The local value of the surface roughness can be obtained by calculating the signal relation: A1/(A1+A2+A3+A4),..., A4/(A1+A2+A3+A4), with the conditions of constant distance Z and angles of inclination $\alpha$ and $\beta$, or by means of other programs of numerical analysis, without changing the essence of the invention. One function of the MFOB **1** is the possibility to separate the small optical signals as a result of applying the principle of multichannel output of information about an object, and as a consequence, the possibility to operate on a small factor of reflection of the reflecting surface Z.

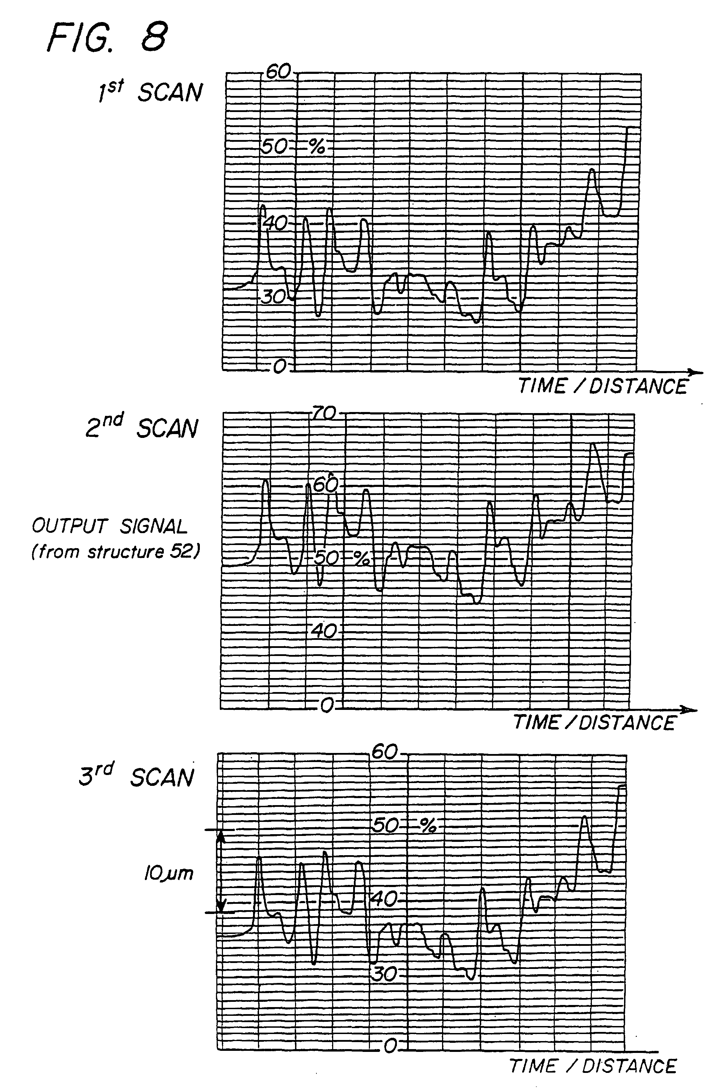

Figure 8 shows of the results of three scans of the same section of a surface (the black rough film) with its displacement along the *x*-axis parallel to the surface plane of the sensitive probe end of MFOB **1.** The maximum deviations from the mean level are 28 micrometers. Figure 8 shows the high repeatability and stability of measurements, and the error for reflectivity, $R_0 \leq 0.3$ does not exceed 1.0%. The *x*-axis is time/distance and the *y*-axis is the output signaL This analysis reveals the accuracy of roughness target scanning - approximately 0.5 micrometer accuracy, as shown by the similarities in all three scans (small error).

Obviously, numerous modifications and variations of the preferred embodiment are possible in view of the disclosure. The structure of the MFOB, for instance, could be altered in its arrangement and number of receiving and transmitting channels. It is, therefore, to be understood that these and other modifications, and their equivalents, may be practiced within the scope of the invention, as described herein.

**Claims**

1. A multi-channel fiber optic, multifunction sensing system for simultaneously sensing two angles between a probe tip and a light reflected target and at least one parameter from the group consisting of displacement, vibration, and roughness, including a fiber optic light conducting bundle having light transmitting fibers and light receiving fibers, and having a flat sensitive probe tip end with at least three types of transmitting and receiving ends of channels divided between three branches **(3,4,5),** wherein the system is **characterized by**:

a) a first **(4)** of said three branches consisting essentially of receiving fibers directed to four sections **(6-9),** means for symmetrically orienting the fibers within a middle point of each section, means for connecting the fibers optically with four respective light sensors **(28-31);**

b) a second **(5)** of said three branches consisting essentially of receiving fibers collected into two sections **(15-16),** means for symmetrically orienting the receiving fibers around the receiving fibers of said first branch, means for connecting the fibers with two respective light sensors **(32-33)**; and

c) a third **(3)** of said three branches consisting essentially of transmitting fibers symmetrically oriented and collected in at least five separated transmitting sections **(10-14)** and connected with between one to five light sources **(40-44).**

2. The multifunction sensing system and multichannel fiber optic bundle sensitive probe of claim 1 which is further **characterized by** having the means for symmetrically orienting at the probe tip comprise a rectangular 3∗3 matrix **(100)** formation having nine sections, whereby the nine sections comprise a first end of fibers having:

a center section of transmitting fibers **(12)** surrounded by a first supplementary section of fibers and bundled into a first separated receiving channel **(16)** forming a part of the second branch **(5)** of the multichannel fiber optic bundle;

a plurality of supplementary sections of fibers placed internally around boundaries of the nine sections to form a collection of second separated receiving channels **(15)** of the second branch **(5)** of the multichannel fiber optic bundle;

four corner sections and the center section of the 3∗3 matrix being occupied by the five separated transmitting sections **(10,11,12,13,14)** from the third branch **(3)** of the multichannel fiber optic bundle;

four middle sections of the 3∗3 matrix, located between two of the respective four corners of the matrix, being occupied by receiving fibers from the four channels **(6,7,8,9)** of the first branch **(4)** of the multichannel fiber optic bundle; and,

a second end of the fibers of the first and second separated receiving channels of the second branch being bundled into at least two separate channels and having means for optical connection to at least two light sensors;

a second end of the fibers of the four channels of the first branch having means for optical connection to light sensors, the light sensors having means for adjusting;

a second end of the fibers of the five separated transmitting sections of the third branch being bundled into between one and five transmitting channels and having means for optical connection to respective light sources.

3. The multifunction sensing system and multichannel fiber optic bundle sensitive probe of claim 2, which is further **characterized by** having a thermostabilized box **65** for housing the second end of the fibers, the box comprising a probe module with a thermosensor **62** and at least one heating element **63.**

4. The multifunction sensing system and multichannel fiber optic bundle sensitive probe of claim 2, which is further **characterized by** having the system further comprise (a) at least six light sensors for connection with the receiving fibers, at least six amplifiers in series with the light sensors; (b) at least two light sources for connection with the transmitting fibers; and (c) a plurality of optical fibers located between the receiving fibers and the sensors, and the transmitting fibers and the sources.

5. The multifunction sensing system and multichannel fiber optic bundle sensitive probe of claim 2, which is further **characterized in that** the system further comprises an electronic module in connection with amplifiers for analyzing and controlling amplified signals, the module comprising two summary elements **(52,53),** two submitting elements **(50, 51)** and two light regulators connected to the receiving channels, whereby:

the two submitting elements **(50,51)** produce two output analog signals related to two angles between the probe tip and the reflected target;

the first summary element **(52)** produces an output analog signal related to the displacement;

the second summary element **(53)** produces an analog signal, free from angle and disturbance influence, related to light reflectance or the roughness of the reflected target; and

further including three zero or analog signal registrators electrically connected to outputs of the fist summary element and of the two submitting elements, whereby the registrators include means for precisely adjusting zero positions in the measuring process and for working range testing in the electronic module.

6. The multifunction sensing system and multichannel fiber optic bundle sensitive probe of claim 5, which is further **characterized by** having an input/output board card for a computer controller which has at least ten analog inputs for analog/digital converting and from between two to five analog outputs for digital to analog converting, the inputs being connected to the receiving channels and the outputs being connected to the transmitting channels.

7. The multifunction sensing system and multichannel fiber optic bundle sensitive probe of claim 6 which is further **characterized by** having a means for programmably controlling, measuring and analyzing data received from the channels.

**Patentansprüche**

1. Ein mehrkanaliges faseroptisches Multifunktions-Fühlsystem zum gleichzeitigen Erfassen zweier Winkel zwischen einer Fühlerspitze und einem lichtreflektierten Ziel und mindestens einem Parameter aus der Gruppe bestehend aus Verschiebung, Schwingung und Rauigkeit, umfassend ein faseroptisches lichtleitendes Bündel mit Licht aussendenden Fasern und Licht empfangenden Fasern, und mit einem flachen Fühlerspitzenende mit mindestens drei Arten von Sende- und Empfangsenden von Kanälen, die auf drei Abzweigungen (3, 4, 5) aufgeteilt sind, wobei das System **dadurch gekennzeichnet ist, dass**:

a) eine erste (4) der genannten drei Abzweigungen im wesentlichen aus Empfangsfasern besteht, die auf vier Abschnitte (6-9) ausgerichtet sind, Mittel zur symmetrischen Ausrichtung der Fasern innerhalb eines Mittelpunkts eines jeden Abschnitts, Mittel zum optischen Verbinden der Fasern mit vier zugehörigen Lichtsensoren (28-31);
b) eine zweite (5) der genannten drei Abzweigungen im wesentlichen aus Empfangsfasern besteht, die in zwei Abschnitten zusammengefasst werden (15-16), Mittel zur symmetrischen Ausrichtung der Empfangsfasern um die Empfangsfasern der genannten ersten Abzweigung, Mittel zum Verbinden der Fasern mit zwei zugehörigen Lichtsensoren (32-33); und
c) eine dritte (3) der genannten Abzweigungen im wesentlichen aus Sendefasern besteht, die symmetrisch ausgerichtet und in mindestens fünf getrennten Sendeabschnitten (10-14) zusammengefasst und mit zwischen eins bis fünf Lichtquellen (40-44) verbunden sind.

2. Das Multifunktions-Fühlsystem und die Fühlerspitze mit mehrkanaligem faseroptischem Bündel nach Anspruch 1, das weiter **gekennzeichnet ist dadurch**, dass das Mittel zur symmetrischen Ausrichtung an der Fühlerspitze eine rechteckige 3∗3-Matrix-(100)-Formation mit neun Abschnitten umfasst, wodurch die neun Abschnitte ein erstes Faserende umfassen, das folgendes aufweist:

einen Mittenabschnitt aus Sendefasern (12), der von einem ersten ergänzenden Faserabschnitt umgeben und in einen ersten getrennten Empfangskanal (16) gebündelt ist, der einen Teil der zweiten Abzweigung (5) des mehrkanaligen faseroptischen Bündels bildet;
eine Vielzahl von ergänzenden Faserabschnitten, die intern um die Grenzen der neun Abschnitte angeordnet sind, um eine Gruppe von zweiten getrennten Empfangskanälen (15) der zweiten Abzweigung (5) des mehrkanaligen faseroptischen Bündels zu bilden;
wobei vier Eckabschnitte und der Mittenabschnitt der 3∗3-Matrix von den fünf getrennten Sendeabschnitten (10,11,12,13,14) von der dritten Abzweigung (3) des mehrkanaligen faseroptischen Bündels besetzt sind; vier Mittenabschnitte der 3∗3-Matrix, die zwischen zwei der jeweiligen vier Ecken der Matrix liegen, von Empfangsfasern von den vier Kanälen (6,7,8,9) der ersten Abzweigung (4) des mehrkanaligen faseroptischen Bündels besetzt sind; und
ein zweites Ende der Fasern des ersten und des zweiten getrennten Empfangskanals der zweiten Abzweigung in mindestens zwei getrennte Kanäle gebündelt ist und Mittel aufweist zur optischen Verbindung mit mindestens zwei Lichtsensoren;
ein zweites Ende der Fasern der vier Kanäle der ersten Abzweigung Mittel aufweist für die optische Verbindung mit Lichtsensoren, wobei die Lichtsensoren über Justierungsmittel verfügen;
ein zweites Ende der Fasern der fünf getrennten Sendeabschnitte der dritten Abzweigung in zwischen eins und fünf Sendekanäle gebündelt ist und Mittel für die optische Verbindung mit den jeweiligen Lichtquellen aufweist.

**3.** Das Multifunktions-Fühlsystem und die Fühlerspitze mit mehrkanaligem faseroptischem Bündel nach Anspruch 2, das weiter **gekennzeichnet ist dadurch**, dass es ein wärmestabiles Gehäuse 65 zur Unterbringung des zweiten Endes der Fasern aufweist, wobei das Gehäuse ein Fühlermodul mit einem Wärmesensor 62 und mindestens einem Heizelement 63 aufweist.

**4.** Das Multifunktions-Fühlsystem und die Fühlerspitze mit mehrkanaligem faseroptischem Bündel nach Anspruch 2, das weiter **gekennzeichnet ist dadurch**, dass das System weiter umfasst (a) mindestens sechs Lichtsensoren zur Verbindung mit den Empfangsfasern, mindestens sechs mit den Lichtsensoren in Reihe geschaltete Verstärker; (b) mindestens zwei Lichtquellen zur Verbindung mit den Sendefasern; und (c) eine Vielzahl von optischen Fasern, die zwischen den Empfangsfasern und den Sensoren und den Sendefasern und den Lichtquellen angeordnet sind.

**5.** Das Multifunktions-Fühlsystem und die Fühlerspitze mit mehrkanaligem faseroptischem Bündel nach Anspruch 2, das weiter **gekennzeichnet ist dadurch**, dass das System weiter ein mit Verstärkern verbundenes elektronisches Modul umfasst, zur Analyse und Steuerung verstärkter Signale, wobei das Modul zwei Summenelemente (52, 53), zwei Verknüpfungselemente (50, 51) und zwei Lichtregler umfasst, die mit den Empfangskanälen verbunden sind, wodurch:

die beiden Verknüpfüngselemente (50, 51) zwei analoge Ausgangssignale erzeugen, die zu den zwei Winkeln zwischen der Fühlerspitze und dem reflektierten Ziel gehören;
das erste Summenelement (52) ein analoges Ausgangssignal erzeugt, das zu der Verschiebung gehört;
das zweite Summenelement (53) ein Analogsignal erzeugt, das frei ist von Winkel- und Störeinflüssen, das zu der Lichtreflexion oder der Rauigkeit des reflektierten Ziels gehört, und
weiter umfassend drei Null- oder Analogsignalregistrierelemente, die elektrisch verbunden sind mit Ausgängen des ersten Summenelements und der beiden Verknüpfungselemente, wodurch die Registrierelemente Mittel umfassen zur präzisen Einstellung von Null-Stellungen in dem Messprozess und zum Prüfen des Arbeitsbereichs in dem elektronischen Modul.

**6.** Das Multifunktions-Fühlsystem und die Fühlerspitze mit mehrkanaligem faseroptischem Bündel nach Anspruch 5, weiter **gekennzeichnet dadurch, dass** es eine Eingangs-/Ausgangsbaugruppe für einen Computer-Controller aufweist, die mindestens zehn Analogeingänge zur analog/digitalen Umwandlung und zwischen zwei bis fünf Analogausgänge zur digital/analogen Umwandlung besitzt, wobei die Eingänge mit den Empfangskanälen und die Ausgänge mit den Sendekanälen verbunden sind.

**7.** Das Multifunktions-Fühlsystem und die Fühlerspitze mit mehrkanaligem faseroptischem Bündel nach Anspruch 6, das weiter **gekennzeichnet ist dadurch**, dass es ein Mittel aufweist zur programmierbaren Steuerung, Messung und Analyse von Daten, die von den Kanälen empfangen werden.

**Revendications**

**1.** Un système senseur multifonctionnel et multicanal à fibres optiques pour le captage simultané de deux angles entre une pointe de sonde et une cible reflétée par la lumière et au moins un paramètre du groupe formé par le déplacement, la vibration et la rugosité, comprenant un faisceau de fibres optiques conducteur de lumière doté de fibres de transmission de la lumière et de fibres de réception de la lumière, ainsi que d'une pointe de sonde capteur plate avec au moins trois types d'extrémités de transmission et de réception de canaux réparties entre trois branches (3, 4, 5), le système étant **caractérisé par** :

a) la première (4) des dites trois branches, essentiellement constituée de fibres de réception dirigées vers quatre sections (6-9), de moyens d'orientation symétrique des fibres dans un point central de chaque section, de moyens de connexion optique des fibres avec quatre capteurs de lumière respectifs (28-31);
b) la seconde (5) des dites trois branches, essentiellement constituée de fibres de réception réunies dans deux sections (15-16), de moyens d'orientation symétrique des fibres de réception autour des fibres de réception de la dite première branche, de moyens de connexion des fibres à deux capteurs de lumière respectifs (32-33); et
c) la troisième (3) des dites trois branches, essentiellement constituée de fibres de transmission orientées symétriquement et réunies dans au moins cinq sections de transmission séparées (10-14) et connectés à de une à cinq sources lumineuses (40-44).

2. Le système senseur multifonctionnel avec la sonde capteur multicanal à faisceau de fibres optiques de la revendication 1, qui est également **caractérisé par le fait qu'**il est doté des moyens d'orientation symétrique à la pointe de la sonde, comprend une formation de matrices rectangulaire 3∗3 (100) de neuf sections, les neuf sections comprenant une première extrémité de fibres comprenant :

une section centrale de fibres de transmission (12) entourée d'une première section supplémentaire de fibres et disposée en faisceau dans un premier canal de réception séparé (16) qui forme une partie de la seconde branche (5) du faisceau de fibres optiques multicanal ;
diverses sections supplémentaires de fibres placées à l'intérieur autour des limites des neuf sections pour former un ensemble de nouveaux canaux de réception séparés (15) de la seconde branche (5) du faisceau de fibres optiques multicanal ;
quatre sections de coin et la section centrale de la matrice 3∗3 occupées par les cinq sections de transmission séparées (10,11,12,13,14) de la troisième branche (3) du faisceau de fibres optiques multicanal ;
quatre sections médianes de la matrice 3∗3, situées entre deux des quatre coins respectifs de la matrice, occupées par des fibres de réception des quatre canaux (6,7,8,9) de la première branche (4) du faisceau de fibres optiques multicanal ; et,
une deuxième extrémité des fibres des premier et second canaux de réception séparés de la seconde branche mis en faisceau dans au moins deux canaux séparés et avec des moyens de connexion optique à au moins deux capteurs de lumière ;
une seconde extrémité des fibres des quatre canaux de la première branche avec des moyens pour la connexion optique à des capteurs de lumière, les capteurs de lumière étant dotés de moyens d'ajustage ;
une seconde extrémité des fibres des cinq sections de transmission séparées de la troisième branche mises en faisceau dans un à cinq canaux de transmission et dotées de moyens pour la connexion optique à des sources de lumière respectives.

3. Le système senseur multifonctionnel avec la sonde capteur multicanal à faisceau de fibres optiques de la revendication 2, qui est également **caractérisé par** la présence d'une boîte thermostabilisée (65) pour loger la seconde extrémité des fibres, la boîte comprenant un module de sonde avec un thermocapteur **62** et au moins un élément chauffant (63).

4. Le système senseur multifonctionnel avec la sonde capteur multicanal à faisceau de fibres optiques de la revendication 2, qui est également **caractérisé par** la présence dans le système (a) d'au moins six capteurs de lumière pour la connexion aux fibres de réception, d'au moins six amplificateurs en série avec les capteurs de lumière ; (b) d'au moins deux sources de lumière pour la connexion aux fibres de transmission; et (c) diverses fibres optiques situées entre les fibres de réception et les capteurs ainsi qu'entre les fibres de transmission et les sources.

5. Le système senseur multifonctionnel avec la sonde capteur multicanal à faisceau de fibres optiques de la revendication 2, qui est également **caractérisé par le fait que** le système comprend également un module électronique connecté à des amplificateurs pour l'analyse et le contrôle de signaux amplifiés, le module comprenant deux éléments sommaires (52, 53), deux éléments de soumission (50, 51) et deux régulateurs de lumière connectés aux canaux de réception, ce par quoi :

les deux éléments de soumission (50, 51) génèrent deux signaux de sortie analogiques en rapport avec deux angles entre la pointe de la sonde et la cible reflétée ;
le premier élément sommaire (52) génère un signal de sortie analogique en rapport avec le déplacement ;
le second élément sommaire (53) génère un signal analogique sans angle et sans influence perturbatrice, en rapport avec la réflexion de la lumière ou la rugosité de la cible reflétée, et
incluant également trois enregistreurs de signaux zéro ou analogiques connectés électriquement à des sorties du premier élément sommaire et
des deux éléments de soumission, les enregistreurs incluant des moyens d'ajustage précis des positions zéro dans le processus de mesure et de test de la plage de travail dans le module électronique.

6. Le système senseur multifonctionnel avec la sonde capteur multicanal à faisceau de fibres optiques de la revendication 5, qui est également **caractérisé par** la présence d'une platine d'entrée/de sortie pour une commande par ordinateur qui a au moins dix entrées analogiques pour la conversion analogique/numérique et de deux à cinq sorties analogiques pour la conversion numérique/analogique, les entrées étant connectées aux canaux de réception et les sorties étant connectées aux canaux de transmission.

7. Le système senseur multifonctionnel avec la sonde capteur multicanal à faisceau de fibres optiques de la revendication 6, qui est également **caractérisé par** la présence de moyens programmables de contrôle, de mesure et d'analyse des donnés transmises par les canaux.

FIG. 1a

## FIG. 1b

FIG. 1c

# FIG. 2

# FIG. 3

# FIG. 4a

SIGNALS OF A1-A4
FOUR BASIC CHANNELS (V)

# FIG. 4b

SIGNALS OF THE BASIC CHANNELS

## FIG. 4c

OUTPUT VOLTAGE (%);
DIGITAL REGISTRATOR DATES (pm)

# FIG. 4d

OUTPUT VOLTAGE (%)
DIGITAL REGISTRATOR DATES (pm)

FIG. 5

FIG. 6

ANALOG OUTPUT 2,3
(VOLT)

TARGET-TO-PROBE ANGLE 1,2
(RAD)

FIG. 7

y

DISPLACEMENT /
VIBRATION
($\mu m$)

2.60 — E-1

2.50

2.40

2.30

0.00        0.50        1.00   E-2    1.50

TIME (sec.)

EP 0 691 525 B1

# FIG. 8

1st SCAN

60
50 %
40
30
0

TIME / DISTANCE

2nd SCAN

OUTPUT SIGNAL
(from structure 52)

70
60
50 %
40
0

TIME / DISTANCE

3rd SCAN

10 μm

60
50 %
40
30
0

TIME / DISTANCE